# EUROPÄISCHE PATENTSCHRIFT

(11) **EP 3 246 199 B1**
(45) Veröffentlichungstag und Bekanntmachung des Hinweises auf die Patenterteilung: **17.06.2020**
(21) Anmeldenummer: 17000695.1
(22) Anmeldetag: 24.04.2017
(51) Int. Cl.: B60N 2/75

(54) **ARMLEHNE**
ARMREST
ACCOUDOIR

(30) Priorität: 20.05.2016 DE 102016006087
(43) Veröffentlichungstag der Anmeldung: 22.11.2017
(73) Patentinhaber: GRAMMER AG, 92224 Amberg (DE)
(72) Erfinder: Stuiber, Martin, 92551 Stulln (DE); Kone, Aly, 90489 Nürnberg (DE)
(74) Vertreter: Roche, von Westernhagen & Ehresmann

(56) Entgegenhaltungen:
- EP-A1- 2 085 267
- US-A- 6 033 015

## Beschreibung

Die Erfindung betrifft eine Armlehne für einen Sitz, insbesondere einen Fahrzeugsitz.

Die Armlehne kann z.B. Teil einer Konsole eines Fahrzeugs sein. Die Armlehne umfasst ein Grundteil, das z.B. von Teilen des Sitzes oder von einer festen Struktur, insbesondere einer Fahrzeugstruktur, gebildet sein kann. Ein Tragarm ist an dem Grundteil gelagert und zwischen einer ersten Endposition und einer zweiten Endposition bewegbar. Der Tragarm ist in wenigstens einer Position arretierbar. Der Tragarm kann sich dann nicht ungewollt aus dieser Endposition herausbewegen.

EP 2 085 267 A1 beschreibt eine Mittelkonsole mit einem Ablagefach, welches mittels eines schwenkbaren Deckels verschließbar ist. Der Deckel umfasst einen Vorsatz, welcher mit einer Feder zusammenwirkt, die fest an dem Ablagefach angeordnet ist. Mit der Feder kann der Deckel in der oberen Endposition lösbar verrastet werden. Die Feder weist in einem oberen Endbereich einen Wulst auf, welcher unter Aufbringung einer erhöhten Bewegungskraft von dem Fortsatz überwunden werden muss, um eine obere Endposition des Deckels zu erreichen oder um den Deckel aus der oberen Endposition herauszubewegen.

US 6,033,015 beschreibt eine Armlehne, wobei eine Armauflage der Armlehne um eine Schwenkachse schwenkbar gelagert ist. Eine um die Schwenkachse gewundene Feder belastet die Armauflage in eine vertikale Position (Spalte 3, Zeile 19 ff.). Das die Armauflage belastende Federende ist mit einem um die Schwenkachse drehbaren Sperrstück 46 bewegungsverbunden. In axialer Richtung ist das Sperrstück mit einer Rampenstruktur versehen, die mit einer korrespondierenden Rampenstruktur eines Halteteils 34 zusammenwirkt.

Bei der Aufwärtsbewegung der Armauflage dreht sich das Sperrstück 46 relativ zu dem Halteteil 34, wobei erste Flächen 62 der Rampen beider Teile 34 und 46 zusammenwirken, bis die Gipfel der Rampen in Kontakt stehen (siehe Spalte 4, Zeile 26 ff. und die Fig. 6 und 7). Dabei wird das Sperrstück 46 axial gegen die Feder bewegt, welche sich dabei spannt. Nach Überschreiten des Gipfels 66 rutscht das Sperrstück in eine Rastposition (siehe Fig. 8), aus der das Sperrstück bei Überschreitung einer Schwellenkraft wieder herausbewegt werden kann.

Ausgehend von dem vorgenannten Stand der Technik war es Aufgabe der Erfindung eine Armlehne zu schaffen, die einfach herstellbar ist und für den Benutzer leicht handhabbar ist.

Die Aufgabe wurde gelöst durch eine Armlehne mit den Merkmalen des Anspruchs 1.

Die Armlehne umfasst ein Grundteil und einen an dem Grundteil zwischen einer ersten Endposition und einer zweiten Endposition schwenkbar gelagerten Tragarm. Eine Feder belastet den Tragarm in Richtung einer Endposition.

Der Tragarm ist relativ zu dem Grundteil in wenigstens einer Position mittels einer Arretiervorrichtung arretierbar. Die Arretiervorrichtung umfasst dem Tragarm zugeordnete erste Arretiermittel, die mit zweiten Arretiermitteln zusammenwirken, die dem Grundteil zugeordnet sind. Der Feder sind die ersten oder die zweiten Arretiermittel zugeordnet. Diese können z.B. von einer bestimmten Formgebung der Feder gebildet sein. Die Arretierung findet z.B. in der oberen Endposition des Tragarms statt.

Als obere Endposition wird die Position des Tragarms bezeichnet, in welcher der Tragarm etwa vertikal angeordnet ist.

Die Feder ist z.B. einteilig ausgebildet. Die Feder kann z.B. als Blattfeder ausgebildet sein.

Die Feder ist eine Schenkelfeder, die einen ersten und einen zweiten Federschenkel aufweist. Das hat den Vorteil, dass den Schenkeln z.B. unterschiedliche Funktionen, wie Stützfunktion, Befestigungsfunktion oder Arretierfunktion, zukommen können. Wenigstens einer der Federschenkel ist z.B. frei bewegbar. Aufgrund der Rückstellkraft der Feder bewegt sich der Federschenkel nach seiner Verformung in die Ausgangslage zurück.

Die Feder umfasst einen Befestigungsbereich, der mit Haltemitteln des Tragarms oder des Grundteils zusammenwirkt. Der Befestigungsbereich ist an dem Tragarm oder an dem Grundteil befestigt und daran unbewegbar angeordnet. Der Befestigungsbereich wirkt mit den Haltemitteln zusammen, um die Feder an dem Tragarm oder an dem Grundteil zu befestigen. Wenigstens einer der Federschenkel ist relativ zu dem Befestigungsbereich bewegbar. Die Federschenkel bilden z.B. von dem Befestigungsbereich abgewinkelte Bereiche, die relativ zu dem Befestigungsbereich schwenkbar sind.

Ein Stützbereich der Feder belastet den Tragarm zumindest in einem Schwenkbereich des Tragarms in Richtung einer Endposition. D.h., der Stützbereich kann den Tragarm über den gesamten Schwenkbereich hinweg in Richtung der Endposition belasten oder lediglich in einem Teilbereich des Schwenkwinkels. Dieser Teilbereich kann z.B. zwischen 15° und 50°, insbesondere etwa 25°, betragen. Die Feder wird z.B. bei der Bewegung des Tragarms in die untere Endposition gespannt und weist in der unteren Endposition die maximale Spannung auf. Bei der Bewegung des Tragarms in Richtung der oberen Endposition entspannt sich die Feder. In dem Fall, dass die Feder den Tragarm lediglich in einem Teilbereich des Schwenkbereichs in die obere Endposition belastet, kann z.B. der Stützbereich lediglich in diesem Teilbereich in Kontakt mit dem Grundteil bzw. mit dem Tragarm stehen.

Die ersten bzw. zweiten Arretiermittel sind dem ersten Federschenkel zugeordnet. Die Arretiermittel sind z.B. so ausgebildet, dass sie einen geringen Federweg benötigen, um von der Arretierposition in die Löseposition verstellt zu werden.

Der Stützbereich ist dem zweiten Federschenkel zugeordnet. Dieser kann z.B. derart ausgebildet sein, dass er einen relativ großen Federweg zurücklegen kann. Die Feder kann dann den Tragarm über einen großen Schwenkwinkel hinweg in die obere Endposition belasten.

Die ersten Arretiermittel sind z.B. formschlüssig mit den zweiten Arretiermitteln in Eingriff bringbar. Das bedeutet, dass z.B. ein Formschlussmittel der Feder mit einem Formschlussmittel des Grundteils oder des Tragarms lösbar in Eingriff bringbar ist. Die Feder ist an dem Tragarm oder an dem Grundteil befestigt. Die zusammenwirkenden Formschlussmittel können derart ausgebildet sein, dass bei Überschreitung einer bestimmten Betätigungskraft auf den Tragarm der Formschluss automatisch gelöst wird. Mit anderen Worten, solange die Betätigungskraft auf den Tragarm unterschritten wird, bleibt der Formschluss bestehen und der Tragarm ist in der Position arretiert.

Die ersten Arretiermittel umfassen z.B. eine Rastschulter und die zweiten Arretiermittel umfassen eine Anlagefläche, um eine Bewegung des Tragarms zu verhindern. Durch eine leichte Bewegung der ersten Arretiermittel können die Rastschulter und die Anlagefläche außer Eingriff gebracht werden. Auf diese Weise kann der Formschluss gelöst werden.

Die Armlehne umfasst z.B. eine Verriegelungsvorrichtung mittels welcher der Tragarm in einer Endposition verriegelbar ist. Wenn z.B. die Feder in der unteren Endposition maximal gespannt ist, belastet die Feder den Tragarm in Richtung der oberen Endposition, sobald die Verriegelungsvorrichtung von der verriegelten Stellung in die entriegelte Stellung bewegt wurde.

Weitere Vorteile der Erfindung ergeben sich anhand eines in den Fig. dargestellten Ausführungsbeispiels. Es zeigen:

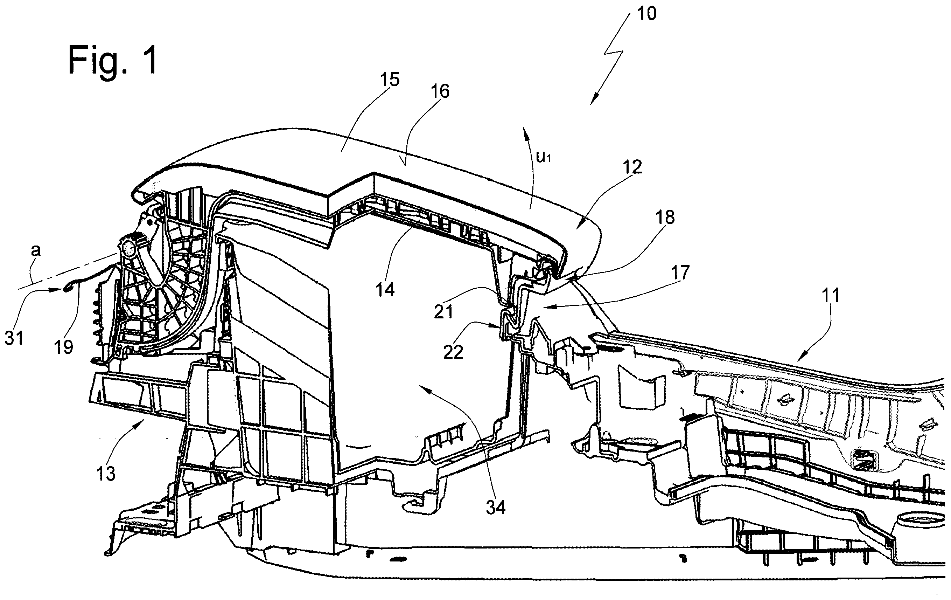

Fig. 1 eine perspektivische, teilweise geschnittene Darstellung einer Mittelkonsole mit Armlehne, wobei ein Tragarm der Armlehne in einer unteren Endposition angeordnet ist,

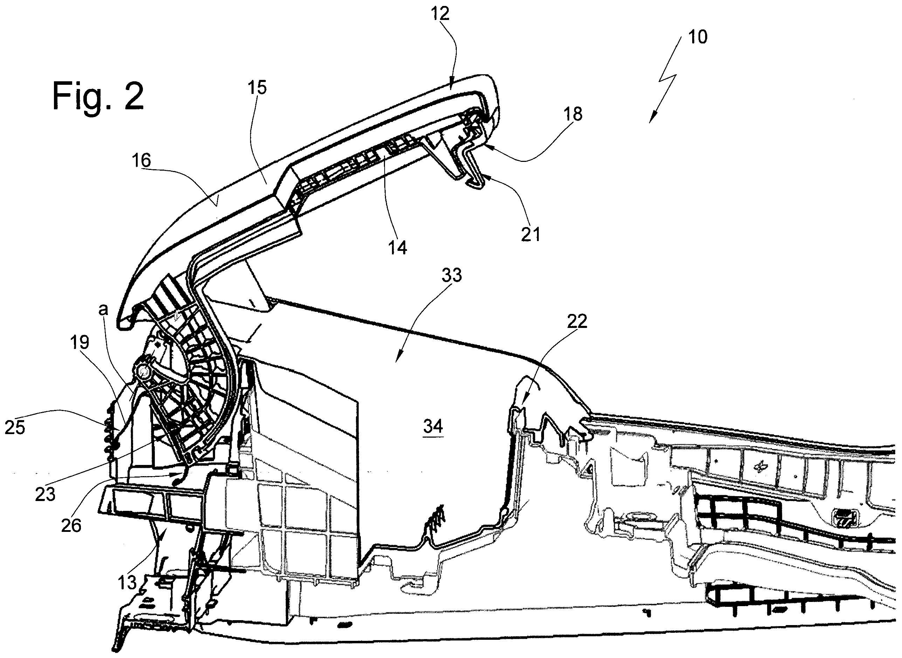

Fig. 2 in Anlehnung an Fig. 1 die Mittelkonsole, wobei der Tragarm sich in einer Zwischenposition zwischen der unteren Endposition und der oberen Endposition befindet,

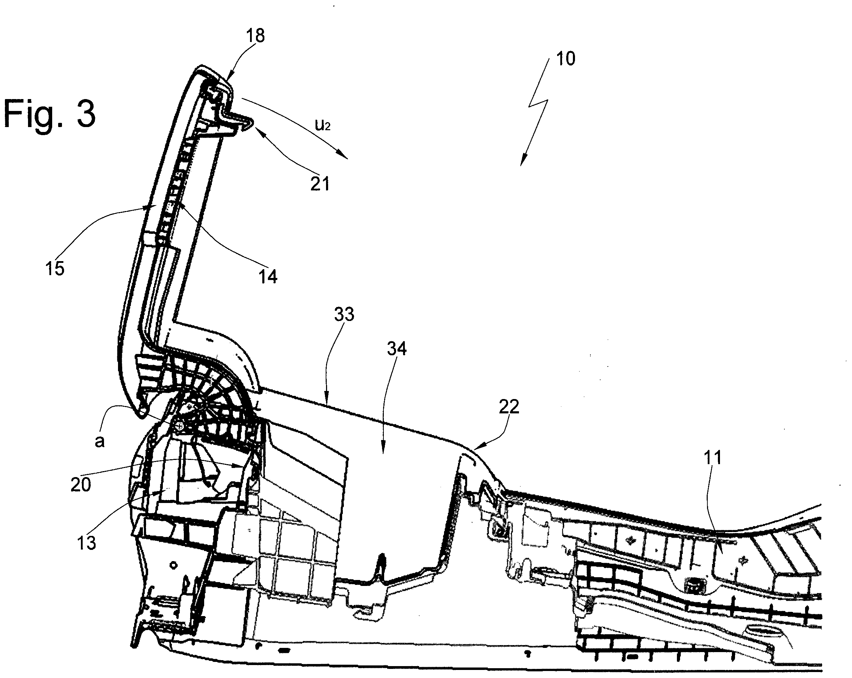

Fig. 3 in Anlehnung an Fig. 1 die Mittelkonsole, wobei der Tragarm in der oberen Endposition zwischen der unteren Endposition und der oberen Endposition befindet,

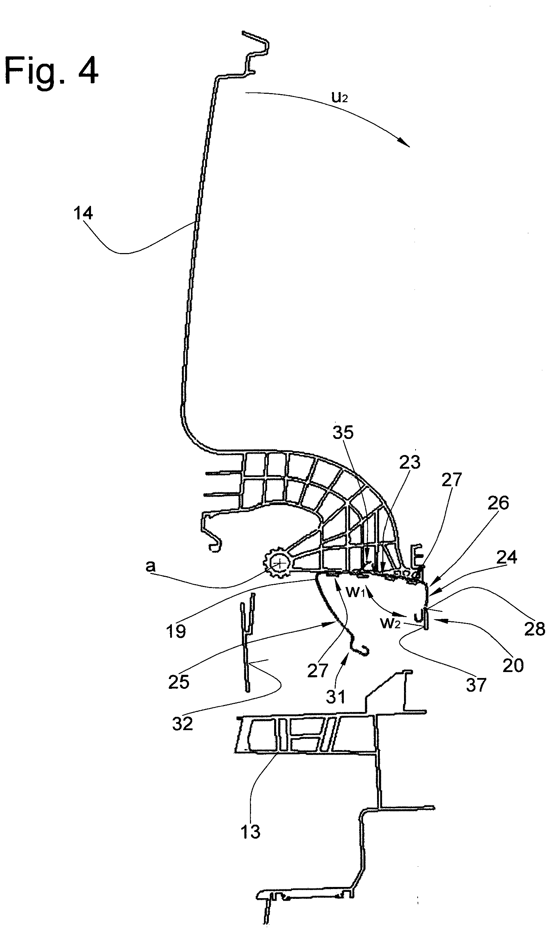

Fig. 4 ein Längsschnitt durch die Armlehne der Mittelkonsole, wobei sich der Tragarm in der oberen Position gemäß Fig. 3 befindet,

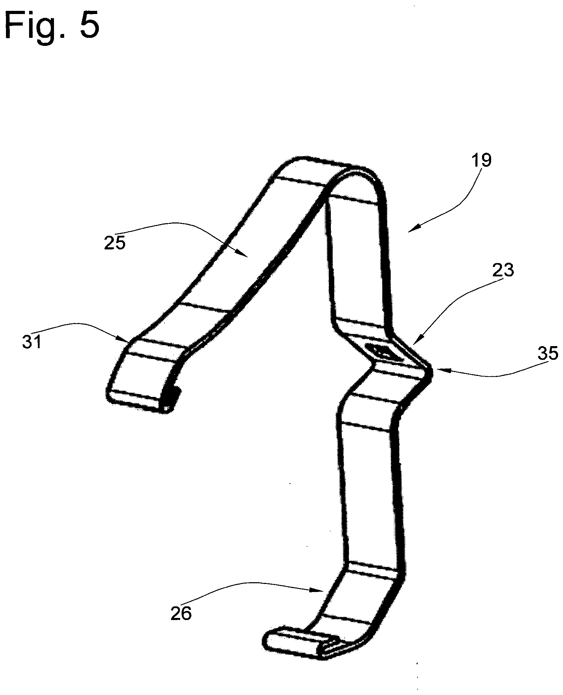

Fig. 5 eine Einzelteildarstellung einer Feder der Armlehne,

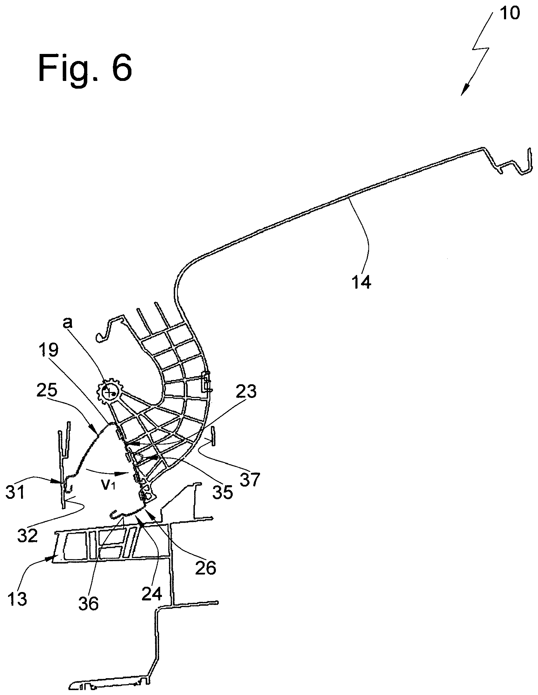

Fig. 6 ein Längsschnitt durch die Armlehne der Mittelkonsole, wobei sich der Tragarm in der Zwischenposition gemäß Fig. 2 befindet,

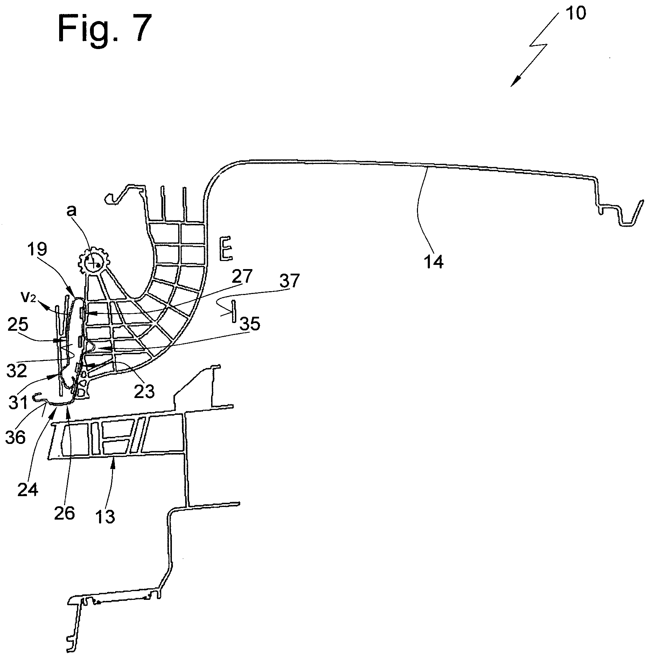

Fig. 7 ein Längsschnitt durch die Armlehne der Mittelkonsole, wobei sich der Tragarm in der unteren Endposition gemäß Fig. 1 befindet.

Eine Armlehne insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

Die Armlehne 10 ist im vorliegenden Ausführungsbeispiel Teil einer Mittelkonsole 11, sie könnte gemäß einer alternativen Ausführung aber auch als separate Armlehne einem Fahrzeugsitz zugeordnet sein. Die Armlehne 10 umfasst eine Armauflage 12, die um eine Schwenkachse a schwenkbar an einem Grundteil 13 gehalten ist. Die Armauflage 12 weist einen Tragarm 14 sowie ein Polster 15 auf. In Fig. 1 ist die Armauflage 12 in einer unteren Endposition angeordnet, die auch als 0°-Position bezeichnet wird. In der unteren Endposition ist eine Auflagefläche 16 im Wesentlichen horizontal angeordnet oder bzgl. einer Horizontalen lediglich leicht geneigt ist. Aus der unteren Endposition kann die Armauflage 12 in Richtung u1 in eine obere Endposition geschwenkt werden, die in Fig. 3 gezeigt ist. In der oberen Endposition ist die Armauflage 12 in bezüglich der unteren Endposition etwa um 90° in Richtung u1 geschwenkt.

Die Armlehne 10 umfasst eine Verriegelungsvorrichtung 17, mit welcher der Tragarm 14 in der unteren Endposition lösbar verriegelbar ist. In einer Riegelposition der Verriegelungsvorrichtung 17 ist der Tragarm 14 in der unteren Endposition verriegelt. Mittels einer Taste 18 einer Betätigungsvorrichtung kann die Verriegelungsvorrichtung 17 in eine Löseposition verstellt werden. In der Löseposition ist der Tragarm 14 nicht mehr verriegelt, so dass die Armauflage 12 aus der unteren Endposition in Richtung u1 geschwenkt werden kann.

Die Armauflage 12 ist derart von einer Feder 19 in Richtung u1 belastet, dass sie nach dem Verstellen der Verriegelungsvorrichtung 17 in die Löseposition von der Feder 19 in eine Zwischenposition gemäß Fig. 2 bewegt wird, in welcher sie bezüglich der unteren Endposition etwa um 25° in Richtung u1 geschwenkt ist. Die Armauflage 12 befindet sich somit in der Zwischenposition zwischen der unteren Endposition und der oberen Endposition. Wenn die Armauflage 12 aus der Zwischenposition in die obere Endposition bewegt werden soll, muss der Benutzer die Armauflage 12 manuell in Richtung u1 schwenken, bis die obere Endposition erreicht ist. In der oberen Endposition ist die Armauflage 12 z.B. etwa vertikal angeordnet.

Mittels einer Arretiervorrichtung 20 wird die Armauflage automatisch in der oberen Endposition arretiert. Sobald eine Kraft F in Richtung u2 auf die Armauflage 12 wirkt, die so groß ist, dass die maximale Haltekraft der Arretiervorrichtung 20 überwunden wird, bewegt sich die Armauflage 12 in Richtung u2. In der unteren Endposition wird die Armauflage 12 automatisch von der Verriegelungsvorrichtung 17 verriegelt.

In den Fig. 1 bis 3 ist zu erkennen, dass die Verriegelungsvorrichtung 17 ein an dem Tragarm 14 gehaltenes erstes Verriegelungsmittel 21 sowie ein an dem Grundteil 13 gehaltenes zweites Verriegelungsmittel 22 umfasst. In der Riegelposition sind die Verriegelungsmittel 21 und 22 eine Bewegung der Armauflage 12 verhindernd in Eingriff und in der Löseposition sind die Verriegelungsmittel 21 und 22 außer Eingriff. Das Verriegelungsmittel 21 ist derart bewegbar, dass es mittels der Taste 18 zwischen der Riegelposition und der Löseposition verstellbar ist. Das Verriegelungsmittel 21 ist von einer Rückstellkraft in die Riegelposition belastet.

Die Armlehne 10 umfasst die Feder 19 (siehe die Fig. 4 und 5), die im vorliegenden Ausführungsbeispiel von einer einteiligen Blattfeder gebildet ist. Die Feder 19 umfasst einen Befestigungsbereich 23 mit einem Vorsprung 35 sowie einen freien Federschenkel 25, der einen Stützbereich bildet und einen freien Federschenkel 26, der einen Arretierbereich bildet.

In Fig. 4 ist der Tragarm 14 der Übersichtlichkeit halber ohne das Polster 15 in der oberen Endposition dargestellt. Der Tragarm 14 umfasst Haltemittel 27, mit welchen der Befestigungsbereich 23 der Feder 19 an dem Tragarm 14 fixiert ist. Der Vorsprung 35 wirkt mit dem Tragarm 14 zusammen, um ein Verschieben des Befestigungsbereichs 23 parallel zu seiner Längsachse zu verhindern. Die Befestigungsmittel 27 sind derart ausgerichtet, dass der Befestigungsbereich 23 etwa radial zu der Schwenkachse a verläuft. Der Federschenkel 26 verläuft hingegen etwa tangential zu der Schwenkachse a. Während der Befestigungsbereich 23 relativ zu dem Tragarm im Wesentlichen unbewegbar ist, sind die Federschenkel 25 und 26 frei bewegbar und können entgegen ihrer Rückstellkraft elastisch verformt werden.

Der Federschenkel 26 umfasst einen Vorsprung 24 der eine Haltefläche 36 ausbildet, die in der oberen Endposition mit einer Gegenfläche 28 des Grundteils 13 derart in Eingriff steht, dass eine Bewegung des Tragarms 14 aus der oberen Endposition in Richtung u2 verhindert wird, solange die Betätigungskraft eine maximale Haltekraft nicht überschreitet. Sobald bei einer Kraft auf den Tragarm 14 in Richtung u2 die maximale Haltekraft überschritten wird, bewegen quer zur Bewegungsrichtung u2 wirkende Kräfte den Federschenkel 26 derart in Richtung w1, dass die Haltefläche 36 außer Eingriff mit der Gegenfläche 28 gerät. Der Tragarm 14 kann dann frei in Richtung u2 geschwenkt werden. Anschließend wird der Federschenkel 26 von seiner Rückstellkraft in Richtung w2 bewegt. Die maximale Haltekraft ist z.B. derart bemessen, dass auf die Armauflage 12 wirkende Trägheitskräfte in normalen Fahrsituationen die Arretiervorrichtung 20 nicht aus der Arretierposition bewegen, dass der Fahrzeuginsasse aber den Tragarm 14 ohne übermäßigen Kraftaufwand aus der oberen Endposition in Richtung u2 bewegen kann.

Wenn der Tragarm 14 aus der oberen Endposition soweit in Richtung u2 geschwenkt wurde, dass er etwa in einer 30°-Position angeordnet ist, gerät der Stützbereich 31 des Federschenkels 25 in Kontakt mit einer Widerlagerfläche 32 des Grundteils 13. Bei weiterer Schwenk-Bewegung des Tragarms 14 in Richtung u2 wird der Federschenkel 25 relativ zu dem Befestigungsbereich 23 und dem Federschenkel 26 in Richtung v1 bewegt und dabei gespannt. In einer 25°-Position besteht ein Kräftegleichgewicht zwischen der in Richtung u1 wirkenden Federkraft und der in Richtung u2 wirkenden Gewichtskraft.

In Fig. 7 ist die untere Endposition dargestellt, in welcher die Feder 19 maximal gespannt ist. Es ist erkennbar, dass der Federschenkel 25 etwa parallel zu dem Befestigungsbereich 23 angeordnet ist. In der unteren Endposition sind außerdem die ersten Verriegelungsmittel 21 und die zweiten Verriegelungsmittel 22 entsprechend Fig. 1 in Eingriff bewegt, d.h. die Verriegelungsvorrichtung 17 ist in der Riegelposition. Die Verriegelungsmittel 21 und 22 sind in Fig. 7 nicht dargestellt.

Wird die Verriegelungsvorrichtung 17 in die Löseposition bewegt, bewegt die Feder 19 den Tragarm 14 wieder in Richtung u1 in eine 25°-Position. Dabei schwenkt der Federschenkel 25 in Richtung v2 und entspannt sich. Aus der 25°-Position kann der Tragarm 14 - wie oben erwähnt - manuell in Richtung u1 in die obere Endposition geschwenkt werden. Kurz vor erreichen der oberen Endposition gerät der Federschenkel 26 mit einer Spannfläche 37 des Grundteils 13 in Kontakt, durch welche der Federschenkel 26 bei weiterer Bewegung des Tragarms 14 in Richtung u1 in Richtung w1 bewegt wird. Bei Erreichen der oberen Endposition rastet die Haltefläche 36 des Federschenkels 25 in Eingriff mit der Gegenfläche 28 des Grundteils 13 ein. In der oberen Endposition ist durch eine Öffnung 33 der Zugriff auf ein Ablagefache 34 möglich. Das Ablagefach 34 ist im vorliegenden Ausführungsbeispiel Teil des Grundteils 13 und einstückig mit diesem ausgebildet.

## Patentansprüche

1. Armlehne, mit einem Grundteil (13) und mit einem an dem Grundteil (13) zwischen einer ersten Endposition und einer zweiten Endposition schwenkbar gelagerten Tragarm (14), wobei der Tragarm (14) relativ zu dem Grundteil (13) in wenigstens einer Position mittels einer Arretiervorrichtung (20) arretierbar ist, wobei der Tragarm (14) erste Arretiermittel (36) aufweist, die mit zweiten Arretiermitteln (28) zusammenwirken, die dem Grundteil (13) zugeordnet sind, und wobei der Tragarm (14) von einer Feder (19) in Richtung (u1) der ersten Endposition belastet ist, wobei der Feder (19) die ersten oder die zweiten Arretiermittel zugeordnet sind, **dadurch gekennzeichnet, dass** die Feder (19) eine Schenkelfeder ist und einen Befestigungsbereich (23) umfasst, der mit Haltemitteln (27) des Tragarms oder des Grundteils zusammenwirkt, wobei der Befestigungsbereich (23) an dem Tragarm oder an dem Grundteil befestigt und daran unbewegbar angeordnet ist, wobei eines der Arretiermittel (36) einem ersten freien Federschenkel (26) und ein Stützbereich einem zweiten freien Federschenkel (25) der Feder zugeordnet ist.

2. Armlehne nach Anspruch 1, **dadurch gekennzeichnet, dass** die Feder (19) von einer einteiligen Blattfeder gebildet ist.

3. Armlehne nach einem der vorhergehenden Ansprüche dass der Stützbereich (31) der Feder (19) zumindest in einem Schwenkbereich des Tragarms (14) mit dem Grundteil (13) zusammenwirkt, um den Tragarm (14) in Richtung der ersten Endposition zu belasten.

4. Armlehne nach einem der vorhergehenden Ansprüche dass die ersten Arretiermittel (35, 36) formschlüssig mit den zweiten Arretiermitteln (28) in Eingriff bringbar sind.

5. Armlehne nach einem der vorhergehenden Ansprüche dass die ersten Arretiermittel eine Rastschulter (36) umfassen und die zweiten Arretiermittel eine Anlagefläche (28) umfassen, um eine Bewegung des Tragarms (14) zu verhindern, solange eine bestimmte Betätigungskraft auf den Tragarm (14) unterschritten wird.

6. Armlehne nach einem der vorhergehenden Ansprüche dass die Armlehne (10) eine Verriegelungsvorrichtung (17) umfasst mittels welcher der Tragarm (14) in der unteren Endposition verriegelbar ist.

## Claims

1. Armrest, with a base part (13) and with a support arm (14) pivotably mounted on the base part (13) between a first end position and a second end position, wherein the support arm (14) may be secured relative to the base part (13) in at least one position by means of a catch device (20), wherein the support arm (14) comprises first catch means (36), which cooperate with second catch means (28), which are assigned to the base part (13), and wherein the support arm (14) is loaded by a spring (19) in the direction (u1) of the first end position, wherein the first or the second catch means are assigned to the spring (19), **characterised in that** the spring (19) is a leg spring and comprises a fastening area (23) which cooperates with retention means (27) of the support arm or the base part, wherein the fastening area (23) is fastened on the support arm or on the base part and is disposed fixedly on it, wherein one of the catch means (36) is assigned to a first free spring leg (26) and a support area is assigned to a second free spring leg (25) of the spring.

2. Armrest according to claim 1, **characterised in that** the spring (19) is formed of a single-piece leaf spring.

3. Armrest according to any of the preceding claims, **characterised in that** the support area (31) of the spring (19) cooperates at least in one pivot area of the support arm (14) with the base part (13) in order to load the support arm (14) in the direction of the first end position.

4. Armrest according to any of the preceding claims, **characterised in that** the first catch means (35, 36) can be engaged with positive locking with the second catch means (28) .

5. Armrest according to any of the preceding claims, **characterised in that** the first catch means comprise a locking shoulder (36) and the second catch means comprise a mounting surface (28) in order to prevent any movement of the support arm (14), for as long as a certain actuating force on the support arm (14) is not exceeded.

6. Armrest according to any of the preceding claims, **characterised in that** the armrest (10) comprises a locking mechanism (17) by means of which the support arm (14) is lockable in the lower end position.

## Revendications

1. Accoudoir avec une partie de base (13) et avec un bras de support (14) monté de manière pivotante entre une première position d'extrémité et une deuxième position d'extrémité, dans lequel le bras de support (14) peut être bloqué dans au moins une position par rapport à la partie de base (13), au moyen d'un dispositif de blocage (20), dans lequel le bras de support (14) présente des premiers moyens de blocage (36) qui coopèrent avec des deuxièmes moyens de blocage (28) qui sont associés à la partie de base (13), et dans lequel le bras de support (14) est chargé par un ressort (19) en direction (u1) de la première position d'extrémité, les premiers ou les deuxièmes moyens de blocage étant associés au ressort, **caractérisé en ce que** le ressort (19) est un ressort à branches et comprend une zone de fixation (23) qui coopère avec des moyens de retenue (27) du bras de support ou de la partie de base, la zone de fixation (23) étant fixée au bras de support ou à la partie de base et montée dessus de manière inamovible, une des moyens de blocage (36) étant associé à une première branche de ressort libre (26) et une zone d'appui à une deuxième branche de ressort libre (25) du ressort.

2. Accoudoir selon la revendication 1, **caractérisé en ce que** le ressort (19) est formé par un ressort à lame d'une seule pièce.

3. Accoudoir selon une des revendications précédentes, **caractérisé en ce que** la zone d'appui (31) du ressort (19) coopère au moins dans une zone d'inclinaison du bras de support (14) avec la partie de base (13) pour charger le bras de support (14) en direction de la première position d'extrémité.

4. Accoudoir selon une des revendications précédentes, **caractérisé en ce que** les premiers moyens de blocage (35, 36) peuvent être mis en prise par conjugaison de formes avec les deuxièmes moyens de blocage (28).

5. Accoudoir selon une des revendications précédentes, **caractérisé en ce que** les premiers moyens de blocage comprennent un élément d'encliquetage (36) et les deuxièmes moyens de blocage une surface d'appui (28) pour empêcher un mouvement du bras de support (14) tant qu'une force d'actionnement définie n'est pas appliquée sur le bras de support (14).

6. Accoudoir selon une des revendications précédentes, **caractérisé en ce que** l'accoudoir (10) comprend un dispositif de verrouillage (17) au moyen duquel le bras de support (14) peut être verrouillé dans la position d'extrémité inférieure.
